# EUROPÄISCHE PATENTSCHRIFT

(11) **EP 2 297 626 B1**
(45) Veröffentlichungstag und Bekanntmachung des Hinweises auf die Patenterteilung: **17.05.2017**
(21) Anmeldenummer: 09772246.6
(22) Anmeldetag: 28.05.2009
(51) Int. Cl.: G05D 16/20, F16K 31/06

(54) **VERFAHREN ZUM BETREIBEN EINES FLUIDVENTILS MIT EINER OSZILLIERENDEN VENTILBEWEGUNG**
METHOD FOR OPERATING A FLUID VALVE BY WAY OF AN OSCILLATING VALVE MOVEMENT
PROCÉDÉ POUR ACTIONNER UNE SOUPAPE À FLUIDE AVEC UN MOUVEMENT DE SOUPAPE OSCILLANT

(30) Priorität: 02.07.2008 DE 102008040062
(43) Veröffentlichungstag der Anmeldung: 23.03.2011
(73) Patentinhaber: Robert Bosch GmbH, 70442 Stuttgart (DE)
(72) Erfinder: HESSENAUER, Juergen, 71706 Markgroeningen (DE); FOERCH, Ulrich, 71638 Ludwigsburg (DE); SCHMITT, Manfred, 64646 Heppenheim (DE); SCHUMACHER, Steffen, 71272 Renningen (DE); WEBER, Nicole, 71701 Schwieberdingen (DE); SCHELL, Oliver, 74382 Neckarwestheim (DE); OTT, Christof, 71679 Asperg (DE)
(86) Internationale Anmeldenummer: PCT/EP2009/056497
(87) Internationale Veröffentlichungsnummer: WO 2010/000546

(56) Entgegenhaltungen:
- DE-A1- 3 137 419
- US-A1- 2006 011 878

## Beschreibung

Die Erfindung betrifft ein Verfahren zum Betreiben eines Fluidventils für ein Steuern oder Regeln eines Fluids, mit mindestens einer beweglichen Ventilkomponente, die mittels mindestens eines elektrischen Ansteuersignals verlagerbar ist, das mindestens einen ersten Ansteuersignalanteil enthält, der eine oszillierende Ventilbewegung der Ventilkomponente herbeiführt.

### Stand der Technik

Hydraulische Systeme sind mittels Stellglieder elektrohydraulischer Ansteuerungen vorwiegend stromgeregelt ausgeführt. Eine Ausregelung von Störgrößen im hydraulischen System, wie zum Beispiel Schwankungen eines Druckversorgungssystems, erfolgt im stromgeregelten System typischerweise über feste hydraulische Blenden und Toleranzen. Eine Anpassung des hydraulischen Systems an verschiedenen Temperaturen ist somit aufwendig und eine Ausregelung von systemverändernden Einflüssen wie Schmutz, Späne und Alterungserscheinungen ist nicht möglich. Um den Nachteilen des stromgeregelten hydraulischen Systems entgegenzuwirken, werden diese stattdessen druckgeregelt. In druckgeregelten hydraulischen Systemen ist eine Ausregelung der Störgrößen möglich und einfach umzusetzen. Nachteilig hierbei ist, dass entsprechende benötigte Stellglieder häufig besonders hohe Nichtlinearität, Unstetigkeit und Nichteindeutigkeit aufweisen.

Stellglieder elektrohydraulischer Ansteuerungen von hydraulischen Systemen weisen auch unabhängig davon, ob sie stromgeregelt oder druckgeregelt sind, nichtlineare Verhaltensweisen wie Haft-Gleit-Reibungs-Übergänge auf, die sich ungünstig auf ein Führungs- und Störverhalten bei einem Regeln auswirken. Um dem zu entgegnen werden die Stellglieder mit einer niederfrequenten Bewegungsüberlagerung versehen, welche stromgeregelt bewegliche Teile der Stellglieder ständig in Bewegung halten. Auf diese Weise werden Haft-Gleit-Reibungs-Übergänge vermieden. Die Bewegungsüberlagerung ist mit einer sehr kleinen Bewegungsamplitude versehen, um keine störenden Druckveränderungen herbeizuführen. Um derartige Bewegungsüberlagerungen gezielt und effizient einsetzen zu können, ist eine genaue Erkenntnis von Reibungsparametern der Stellglieder erforderlich, was voraussetzt, dass konstante Umgebungsbedingungen und Stellglieder mit niedrigen Parameterstreuungen bei deren Produktion vorhanden sind. Auch hier können Langzeiteinflüsse wie Alterungserscheinungen bei der Regelung der Bewegungsüberlagerung nicht berücksichtigt werden.

Aus der WO 2006037715 geht ein Verfahren der oben genannten Art hervor. Ein Magnetventil wird mittels eines Pulsweitenmodulationssignals angesteuert, wobei dem Pulsweitenmodulationssignal ein Schwingungssignal hinzugefügt wird, welches einen Anker des Magnetventils gezielt mit konstanten kleinen Schwingungen um eine Mittellage schwingen lässt.

Aus der US 5222417 geht ein Schwingungssignal hervor, welches ein Ventil in Schwingungen versetzt, wobei das Schwingungssignal anhand einer Durchflussmenge durch das Ventil geregelt wird.

Die EP 0929020 beschreibt ein Verfahren zur Regelung eines elektromagnetischen, proportionalen Druckregelungsventils mit einer Schwingung zur Bewegungsüberlagerung. Die Bewegungsüberlagerung haben keinerlei Auswirkungen auf den durch das Druckregelungsventil geregelten Druck.

Aus der DE 31 37 419 A1 ist ein Verfahren bekannt, bei dem die Bewegung der Ventilkomponente mittels eines elektromechanischen Wegsensors erfasst und zur Regelung eines ersten, die oszillierende Ventilbewegung bewirkenden Ansteuersignalanteils verwendet wird. Das Verhalten der beweglichen Ventilkomponente wird direkt zu erfassen und bei der Ansteuerung des Fluidventils zu berücksichtigen. Der Wegsensor muss an dem Fluidventil derart angeordnet werden, so dass er in direkter Verbindung mit der beweglichen Ventilkomponente steht. Dies erfordert einen entsprechenden, zur Verfügung stehenden Bauraum und darüber hinaus einen hohen Aufwand und Kosten bezüglich der Implementierung des Wegsensors sowie der Sicherstellung der Dichtheit des Fluidsystems.

Die Aufgabe der Erfindung wird dahin gehen, ein Verfahren zu schaffen, das es ermöglicht auf einfache und kostengünstige Weise eine
Bewegungsüberlagerung herbeizuführen, die trotz verändernder Umgebungsbedingungen, Parameterstreuungen von Stellgliedern und Langzeiteinflüssen wie Alterungserscheinungen gleichbleibend ist.

### Offenbarung der Erfindung

Erfindungsgemäß ist vorgesehen, dass im Fluid durch die oszillierende Ventilbewegung erzeugte Druckschwingungen erfasst und für eine mittels des ersten Ansteuersignalanteils bewirkten Regelung der oszillierenden Ventilbewegung verwendet werden. Mittels der Regelung der oszillierenden Ventilbewegung - einer Bewegungsüberlagerung - werden direkt die Auswirkungen des Fluidventils auf das Fluid geregelt. Gegenüber einer stromgeregelten Vorgehensweise muss hier keine Kenntnis von Reibungsparametern in dem Fluidventil vorliegen, um ein hochgenaues Regelergebnis zu erzielen. Durch das Erfassen der Druckschwingungen werden gleichzeitig sämtliche Nichtlinearitäten, Unstetigkeiten und Nichteindeutigkeiten des Fluidventils miterfasst, sodass auch veränderte Umgebungsbedingungen, Parameterabweichungen aufgrund von Parameterstreuungen bei der Herstellung und Langzeiteinflüsse auf das Fluidventil bei der Regelung berücksichtigt werden. Besonders vorteilhaft hierbei ist, dass aufgrund der Erfindung für große Chargen von Fluidventilen mit erheblichen herstellungsbedingten Parameterstreuungen robuste Parametrierungen und Reglereinstellungen vorgenommen werden können. Ferner ist es möglich, dass Fluidventile bereits bei der Herstellung mit gröberen Toleranzen versehen werden können, wodurch ein Ausschuss an Fluidventilen bei der Herstellung sinkt. Ferner reduziert sich ein Applikationsaufwand bei einer druckgeregelten Regelung gegenüber einem Applikationsaufwand bei einer stromgeregelten Regelung der oszillierenden Ventilbewegung. Zusätzlich kann eine Fehlfunktion des Fluidventils erkannt werden, sofern eine Regeldifferenz an dem Fluidventil auftritt. Eine Anwendung des erfindungsgemäßen Verfahrens ist insbesondere in einem druckgeregelten hydraulischen System vorteilhaft, da eine Erfassung des Drucks bereits vorliegt.

Nach einer Weiterbildung der Erfindung ist vorgesehen, dass der Volumenstrom und/oder der Druck des Fluids gesteuert und/oder geregelt wird.

Nach einer Weiterbildung der Erfindung ist vorgesehen, dass die Ventilkomponente zum Steuern oder Regeln des Fluids mittels mindestens eines zweiten Ansteuersignalanteils des Ansteuersignals eine Grundbewegung ausführt, die zu Grunddruckänderungen im Fluid führt. Der zweite Ansteuersignalanteil bewirkt eine Verlagerung der Ventilkomponente - der Grundbewegung - die einen gewünschten Steuerungs- oder Regelungseffekt innerhalb des Fluids auslöst. Aufgrund der Grundbewegung ergibt sich eine Grunddruckänderung im Fluid. Die Grundbewegung wird von der oszillierenden Ventilbewegung überlagert, sodass sich gemeinsam eine Gesamtbewegung ergibt.

Nach einer Weiterbildung der Erfindung ist vorgesehen, dass die Grundbewegung und die oszillierende Ventilbewegung gemeinsam oder getrennt anhand mindestens eines Sollwerts geregelt wird/werden. Eine gemeinsame Regelung von Grundbewegung und oszillierender Ventilbewegung führt zu einer Mehrgrößenregelung und damit zu einem sehr guten Gesamtführungs- und Gesamtstörverhalten, was eine hohe Regelgüte nach sich zieht. Eine getrennte Regelung von Grundbewegung und oszillierender Ventilbewegung kann mittels einfacher Regelungsverfahren herbeigeführt werden. Insbesondere kann für ein Regelung der oszillierenden Ventilbewegung eine einfache lineare Regelung, wie eine Proportionalregelung, vorgesehen sein. Ein Einsatz dieser einfachen Regelungsverfahren führt zu einer sehr kostengünstigen, einfachen und robusten Umsetzung des erfindungsgemäßen Verfahrens.

Nach einer Weiterbildung der Erfindung ist vorgesehen, dass die Summe aus Grunddruckänderungen und Druckschwingungen Gesamtdruckänderungen des Fluids darstellt. Bei Überlagerung der oszillierenden Ventilbewegungen und der Grundbewegungen ergibt sich, dass sich auch die daraus resultierenden Änderungen des Drucks des Fluids überlagern und damit Gesamtdruckänderungen bilden. Die Bildung der Gesamtdruckänderungen ermöglicht ein einfaches Erfassen der Wirkung der Gesamtbewegung, da nur ein einzelner Druck an einer einzelnen Stelle im Fluid erfasst werden muss.

Nach einer Weiterbildung der Erfindung ist vorgesehen, dass aus den Gesamtdruckänderungen die Druckschwingungen durch Berechnung oder Filterung ermittelt werden. Die Ermittlung der Druckschwingungen aus den Gesamtdruckänderungen kann insbesondere dann erfolgen, wenn eine bestimmte Grunddruckänderung bekannt ist und/oder erwartet wird. In diesem Fall muss die bekannte Grunddruckänderung lediglich von den Gesamtdruckänderungen subtrahiert werden. Ferner ist es möglich, aufgrund des oszillierenden Charakters der Ventilbewegung einen periodischen Anteil aus den Gesamtdruckänderungen mittels entsprechender Filter, wie beispielsweise einem Bandpass, herauszufiltern. Die im Vergleich mit der oszillierenden Ventilbewegung sehr trägen Grundbewegungen können beispielsweise mit einem Tiefpass herausgefiltert werden. Ein derartiges Herausfiltern ermöglicht die Grundbewegung und die oszillierende Ventilbewegung getrennt zu regeln.

Nach einer Weiterbildung der Erfindung ist vorgesehen, dass die oszillierende Ventilbewegung anhand von Amplituden der Druckschwingungen geregelt wird. Ein Einsatz der Amplituden der Druckschwingungen als Regelgröße lässt einen einfachen und zuverlässigen Rückschluss auf die Amplitude der oszillierenden Ventilbewegung zu. Aufgrund eines sehr direkten und einfachen physikalischen Zusammenhangs zwischen der oszillierenden Ventilbewegung und den Druckschwingungen ergibt sich eine sehr hohe Regelgüte bei niedrigem erforderlichen Regelungsaufwand. Bei der Verwendung der Amplituden der Druckschwingungen als Regelgröße kann insbesondere vorgesehen sein, die erfassten Werte der Druckschwingungen durch zusätzliche Filter, Schätzungen und Näherungen weiter zu verbessern, um eine weiter verbesserte Regelgüte zu erzielen. Der Regelung wird dann als Sollwert eine Sollamplitude zugeführt.

Nach einer Weiterbildung der Erfindung ist vorgesehen, dass sprunghafte Verläufe in den Druckschwingungen und/oder im Sollwert linearisiert werden. Aufgrund nichtlinearer Einflüsse, wie beispielsweise mechanisches Spiel in dem Fluidventil, können sich sprunghafte Verläufe in den Druckschwingungen ergeben. Ferner können sehr schnelle Sollwertänderungen in Form sprunghafter Verläufe des Sollwerts gewünscht sein. Derartige sprunghafte Verläufe sind innerhalb einer Regelung nachteilig, da diese zu ungewollten Regelungszuständen und starken Schwingungen führen können. Deshalb ist es vorteilhaft, wenn sprunghafte Verläufe linearisiert werden, insbesondere bevor diese der Regelung zugeführt werden. Eine Linearisierung kann beispielsweise dadurch erreicht werden, dass der sprunghafte Verlauf zunächst verzögert wird und in der Verzögerung ein linearer Übergang in Form einer Rampe geschaffen wird.

Nach einer Weiterbildung der Erfindung ist vorgesehen, dass als Fluidventil ein Hydraulikventil eingesetzt wird.

Nach einer Weiterbildung der Erfindung ist vorgesehen, dass als Fluidventil ein Magnetventil eingesetzt wird. Die Verwendung eines Magnetventils ermöglicht eine einfache Umsetzung des Ansteuersignals und damit der Ansteuersignalanteile in Form oszillierender elektrischer Signale, die zur Bildung des Ansteuersignals miteinander überlagert werden.

Nach einer Weiterbildung der Erfindung ist vorgesehen, dass als Ansteuersignal ein Pulsweitenmodulationssignal verwendet wird. Derartige Regelungen führen zu einer hohen Robustheit und hoher Flexibilität bei geringen Kosten.

Nach einer Weiterbildung der Erfindung ist vorgesehen, dass eine elektrische Ausgangsstufe das Ansteuersignal aufnimmt und ein Ventilstellsignal erzeugt, das eine Spule des Magnetventils bestromt. Die elektrische Ausgangsstufe ist in der Lage, anhand des Ansteuersignals ein Ventilstellsignal bereitzustellen, welches genügend elektrische Energie besitzt, um die Ventilkomponente des Magnetventils mittels einer Spule zu verlagern. Somit ist es möglich, dass das Ansteuersignal mit niedriger elektrischer Energie erzeugt werden kann, wohingegen ein hoher elektrischer Energieaufwand auf das Magnetventil beschränkt ist.

Nach einer Weiterbildung der Erfindung ist vorgesehen, dass das Ventilstellsignal eine Stellfrequenz aufweist und dass durch Herabsetzen der Stellfrequenz die oszillierende Ventilbewegung bewirkt wird. Es ist vorgesehen, dass die elektrische Ausgangsstufe als Ventilstellsignal ein periodisches Signal, wie beispielsweise ein Trägersignal mit einer Trägerfrequenz, bereitstellt. Die Stellfrequenz wird soweit herabgesetzt, dass die Ventilkomponente mit der Ventilbewegung der herabgesetzten Stellfrequenz folgen kann. Ein Herabsetzen dieser Stellfrequenz ist beispielsweise durch Überlagerung des Stellsignals mit einem zusätzlichen niederfrequenten Signal denkbar.

Nach einer Weiterbildung der Erfindung ist vorgesehen, dass das Ventilsignal die Spule mit der herabgesetzten Stellfrequenz zur Erzeugung der osszilierenden Ventilbewegung bestromt wird.

Nach einer Weiterbildung der Erfindung ist vorgesehen, dass das Fluidventil in einem Automatgetriebe, insbesondere eines Fahrzeugs, verwendet wird. Die Verwendung des Fluidventils in dem Automatgetriebe führt zu einer hochgenauen Ansteuerung des Automatgetriebes bei gleichzeitiger Kostensenkung, da Fluidventile mit größeren Toleranzen eingesetzt werden können. Zudem wird die Lebensdauer des Automatgetriebes erhöht, da Langzeiteinflüsse der Ventile durch die Regelung berücksichtigt werden und so eine hohe Regelgüte über eine lange Zeitspanne beibehalten wird.

Nach einer Weiterbildung der Erfindung ist vorgesehen, dass das Fluidventil in dem Automatgetriebe eine Getriebebremse und/oder eine Getriebekupplung betätigt. Die hohe Genauigkeit der Fluidventile führt bei Betätigung der Getriebebremse oder Getriebekupplung zu exakten Schaltvorgängen. Diese minimieren einen Verschleiß des Automatgetriebes und erhöhen somit seine Lebensdauer. Ferner kann das Fluidventil aufgrund der exakten Betätigung der Getriebebremse oder der Getriebekupplung dazu verwendet werden, die Schaltvorgänge im Automatgetriebe erheblich zu beschleunigen.

Nach einer Weiterbildung der Erfindung ist vorgesehen, dass der Getriebebremse und/oder Getriebekupplung mindestens eine Fluidblende zugeordnet ist und die Gesamtdruckänderungen strömungstechnisch vor und/oder hinter der Fluidblende erfasst werden. Die Getriebebremse oder die Getriebekupplung wird üblicherweise von einem hydraulische System angesteuert. Innerhalb dieses hydraulischen Systems sind Fluidblenden angeordnet, die einen Druckausgleich von einer Strömungsseite der Fluidblende zur anderen Strömungsseite der Fluidblende verlangsamen und dadurch störende Einflüsse, wie hochfrequente Schwingungen im hydraulischen System, herausfiltern. Eine Erfassung der Gesamtdruckänderungen hinter der Fluidblende ermöglicht eine Erfassung der Gesamtdruckänderungen, bei der bereits störende Einflüsse durch die Fluidblende entfernt wurden. Daraus ergibt sich, dass eine Nachbearbeitung der erfassten Gesamtdruckänderungen für eine hohe Regelgüte vereinfacht oder ganz unterlassen werden kann. Eine Erfassung der Gesamtdruckänderungen vor der Fluidblende ermöglicht eine besonders vollständige Erfassung der Gesamtdruckänderungen, da keine Filterung durch die Fluidblende erfolgt ist. Ferner ist denkbar, die Gesamtdruckänderungen sowohl vor als auch nach der Fluidblende zu erfassen und Störungen durch Vergleich beider Werte auszufiltern.

Nach einer Weiterbildung der Erfindung ist vorgesehen, dass die oszillierende Ventilbewegung im Wesentlichen eine Sinusbewegung ist. Hieraus ergibt sich eine besonders einfache Erfassung der daraus resultierenden Druckschwingungen, die ebenfalls einen sinusförmigen Charakter haben. Ferner ist dabei eine sehr einfache Filterung der Druckschwingungen aus den erfassten Gesamtdruckänderungen möglich. Schließlich kann durch die Verwendung von der Sinusbewegung als oszillierende Ventilbewegung eine sehr einfache und robuste Regelung realisiert werden.

Die Erfindung betrifft ferner ein Steuergerät zum Betreiben eines Fluidventils für ein Steuern oder Regeln eines Fluids, insbesondere nach einem der vorhergehenden Verfahren, wobei das Fluidventil mindestens eine bewegliche Ventilkomponente aufweist, die von dem Steuergerät mittels mindestens eines elektrischen Ansteuersignals verlagerbar ist, und das mindestens einen ersten Ansteuersignalanteil aufweist, der eine oszillierende Ventilbewegung der Ventilkomponente herbeiführt, wobei das Fluid aufgrund der oszillierenden Ventilbewegung Druckschwingungen aufweist und das Steuergerät gemeinsam mit den Druckschwingungen und dem Ansteuersignal eine Ventilbewegungsregelung bildet.

### Kurze Beschreibung der Zeichnungen

Die Zeichnungen veranschaulichen die Erfindung anhand eines Ausführungsbeispiels und zwar zeigt
- Figur 1: ein Strukturbild einer Regelung einer oszillierenden Ventilbewegung und
- Figur 2: ein erweitertes Strukturbild der Regelung der oszillierenden Ventilbewegung.

### Ausführungsform(en) der Erfindung

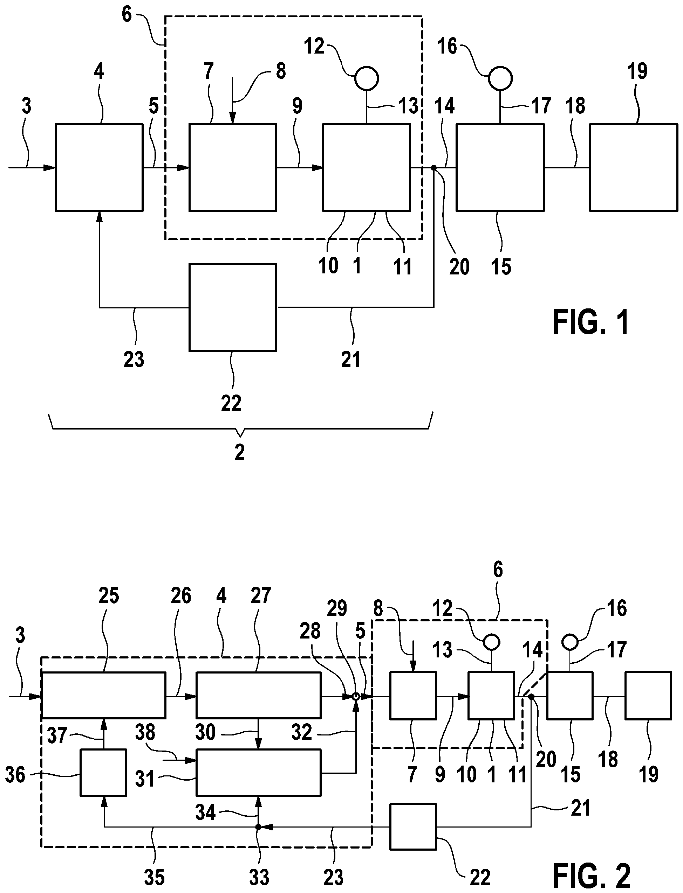

Die Figur 1 verdeutlich das erfindungsgemäße Verfahren zum Betreiben eines Fluidventils 1, das sich in einem Regelkreis 2 in einem nicht dargestellten hydraulischen System eines ebenfalls nicht dargestellten Automatgetriebes eines Fahrzeugs befindet. Das Fluidventil 1 enthält eine nicht dargestellte Ventilkomponente, die mittels des Ansteuersignals verlagerbar ist. Dem Regelkreis 2 wird ein Sollwert P_{1ref} über einen Pfeil 3 zugeführt, indem der Sollwert P_{1ref} an eine Regeleinrichtung 4 übergeben wird. Über einen Pfeil 5 wird ein Ansteuersignal an eine Regelstrecke 6 weitergegeben. Die Regelstrecke 6 weist eine elektrische Ausgangsstufe 7 auf, an die das Ansteuersignal über den Pfeil 5 übergeben wird. Ferner erhält die elektrische Ausgangsstufe 7 eine Versorgungsspannung U_{Batt} über einen Pfeil 8. Die elektrische Ausgangsstufe 7 erzeugt ein Ventilstellsignal, welches über einen Pfeil 9 auf das Fluidventil 1 wirkt. Das Fluidventil 1 ist als Magnetventil 10 ausgeführt, welches ein Hydraulikventil 11 darstellt. Dem Fluidventil 1 wird aus einem Druckspeicher 12 ein Versorgungsdruck p_{VD} mittels einer Leitung 13 zugeführt. Über eine Leitung 14 gibt das Fluidventil 1 einen Gesamtdruck p₁ an einen Druckverstärker 15 weiter. Dem Druckverstärker 15 ist ein Druckspeicher 16 zugeordnet, der mittels einer Leitung 17 den Druckverstärker 15 mit einem Systemdruck p_{sys} versorgt. Der Druckverstärker 15 verstärkt den Gesamtdruck p₁ und erzeugt somit einen verstärkten Druck p₂, welcher über eine Leitung 18 an eine Getriebekupplung 19 des Automatgetriebes weitergegeben wird. Es ist auch denkbar, dass anstatt an die Getriebekupplung 19 an eine Getriebebremse der Druck p₂ für eine Ansteuerung weitergegeben wird. Die Leitung 14 weist eine Verzweigung 20 auf, welche mit einer Leitung 21 verbunden ist, die den Gesamtdruck p₁ zu einem Drucksensor 22 weiterleitet. Der Drucksensor 22 erfasst die Werte des Gesamtdrucks p₁ und übermittelt die Werte über einen Pfeil 23 an die Regeleinrichtung 4. Die Leitungen 13, 14, 17, 18 und 21 enthalten ein Fluid 24.

Der dargestellte Regelkreis 2 regelt den Gesamtdruck p₁ über das Fluidventil 1. Zu diesem Zweck wird der Regeleinrichtung 4 der Sollwert P_{1ref} übergeben. Die Regeleinrichtung 4 erzeugt daraufhin das Ansteuersignal, welches von der elektrischen Ausgangsstufe 7 verstärkt wird, wodurch das Ventilstellsignal entsteht. Das Ventilstellsignal ist in der Lage, die Ventilkomponente des Fluidventils 1 zu verlagern, um auf diese Weise Einfluss auf den Gesamtdruck p₁ nehmen zu können. Das Verlagern der Ventilkomponente führt dazu, dass der Versorgungsdruck p_{VD} aus dem Druckspeicher 12 vollständig oder teilweise in die Leitung 14 geführt wird. Über die Verzweigung 20 und die sich daran anschließende Leitung 21 wird der so eingestellte Gesamtdruck p₁ an den Drucksensor 22 weitergegeben. Der Drucksensor 22 misst den Gesamtdruck p₁ und übergibt die so erfassten, also gemessenen, Werte zurück an die Regeleinrichtung 4. Um eine Wirkung innerhalb des Automatgetriebes erzielen zu können, wird der Gesamtdruck p₁ mittels des Druckverstärkers 15 verstärkt. Zu diesem Zweck ist dem Druckverstärker 15 der Druckspeicher 16 zugeordnet. Der Druckverstärker 15 erhält aus dem Druckspeicher 16 über die Leitung 17 den Systemdruck p_{sys}, der zur Verstärkung des Gesamtdrucks p₁ dient. Der Druckverstärker 15 erzeugt somit den verstärkten Druck p₂, der in der Lage ist über die Leitung 18 die Getriebekupplung 19 zu betätigen.

Die Figur 2 zeigt das Verfahren zum Betreiben des Fluidventils 1 aus Figur 1, wobei die Regeleinrichtung 4 ausführlich dargestellt ist. Die Regeleinrichtung 4 ist gestrichelt dargestellt und enthält mehrere Komponenten. Sie enthält einen Druckregler 25 dem über den Pfeil 3 der Sollwert P_{1ref} übergeben wird. Der Druckregler 25 erzeugt ein Stellsignal, das über einen Pfeil 26 an einen Pulsweitenmodulationsgenerator 27 weitergegeben wird. Der Pulsweitenmodulationsgenerator 27 erzeugt ein Pulsweitenmodulationssignal, welches ein zweites Ansteuersignal darstellt und über dem Pfeil 28 an einen Überlagerungspunkt 29 weitergeleitet wird. Ferner übergibt der Pulsweitenmodulationsgenerator 27 das Pulsweitenmodulationssignal mittels eines Pfeils 30 an einen Block 31, der über einen Pfeil 38 einen Sollwert in Form einer Sollamplitude erhält. Der Block 31 erzeugt ein erstes Ansteuersignal, das über einen Pfeil 32 an den Überlagerungspunkt 29 weitergeleitet wird. Der Überlagerungspunkt 29 ist mittels des Pfeils 5 mit der elektrischen Ausgangsstufe 7 verbunden und überlagert den ersten Ansteuersignalanteil mit dem zweiten Ansteuersignalanteil wodurch das Ansteuersignal entsteht. Ausgehend vom Drucksensor 22 werden die vom Drucksensor 22 erfassten Werte über dem Pfeil 23 an die Regeleinrichtung 4 übergeben. Dabei mündet der Pfeil 23 in einer Verzweigung 33, die über einen Pfeil 34 die Werte an den Block 31 übergibt und über einen weiteren Pfeil 35 die Werte an ein Filter 36 übergibt. Dieser kann beispielsweise ein Tiefpassfilter sein. Das Filter 36 filtert die Werte oder nimmt Berechnungen anhand der Werte aus Pfeil 35 vor und gibt die Ergebnisse mittels eines Pfeils 37 an den Druckregler 25 weiter. Ferner ist es denkbar, dass für die Berechnungen Werte aus dem Block 31, wie beispielsweise die Druckschwingungen, verwendet werden.

Innerhalb der Regeleinrichtung 4 erfolgt ein getrenntes Regeln von einer Grundbewegung und einer oszillierenden Ventilbewegung des Fluidventils 1. Der Block 31 weist einen Regler auf, der die oszillierende Ventilbewegung regelt, wohingegen der Druckregler 25 ausschließlich für ein Regeln der Grundbewegung zuständig ist. Somit ergeben sich zwei Regelpfade innerhalb der Regeleinrichtung 4. Ein erster Regelpfad beginnt mit dem Druckregler 25, welcher mittels seines Stellsignals über den Pulsweitenmodulationsgenerator 27 den zweiten Ansteuersignalanteil erzeugt, der eine Grundbewegung der Ventilkomponente herbeiführt. Durch die Grundbewegung der Ventilkomponente entstehen die Grunddruckänderungen im Gesamtdruck p₁. Die Werte der Grunddruckänderungen werden gemeinsam mit den Werten der Gesamtdruckänderungen von dem Drucksensor 22 erfasst und an das Filter 36 weitergegeben. So können mittels des Filters 36 die Grunddruckänderungen aus den Gesamtdruckänderungen herausgefiltert werden und zurück an den Druckregler 25 geführt werden, wodurch sich der erste Regelpfad schließt. Ein zweiter Regelpfad beginnt bei der Verzweigung 33 und verläuft dann über den Block 31 zur Regelstrecke 6. Die Rückführung in dem zweiten Regelpfad ergibt sich über den Drucksensor 22 mittels der Pfeile 21 und 23. Der Block 31 weist einen Bandpassfilter auf, welcher Druckschwingungen aus den Werten der erfassten Gesamtdruckänderungen herausfiltert. Die Amplituden der Druckschwingungen werden mit der vorgegebenen Sollamplitude aus dem Pfeil 38 verglichen und mittels des in dem Block 31 enthaltenen Reglers geregelt. Dieser Regler kann beispielsweise als einfacher, linearer Regler ausgeführt sein. Das Pulsweitenmodulationssignal wird in dem Block 31 derart verändert, dass es einen ersten Ansteuersignalanteil ergibt. Dieser erste Ansteuersignalanteil wird im Überlagerungspunkt 29 mit dem zweiten Ansteuersignalanteil überlagert, sodass sich das Ansteuersignal bildet. Die Rückführung zu dem Block 31 erfolgt von dem Überlagerungspunkt 29 bis zur Verzweigung 33 wie im ersten Regelpfad. Ausgehend von der Verzweigung 33 werden die Werte der von dem Drucksensor 22 erfassten Gesamtdruckänderungen an den Block 31 übergeben, wodurch der zweite Regelpfad geschlossen ist. Aufgrund der Trennung einer Regelung der Grundbewegung und der oszillierenden Ventilbewegung ist eine besonders gute Regelgüte bei dem Regler des Blocks 31 der oszillierenden Ventilbewegung möglich. Um eine besonders gute Regelung gewährleisten zu können, ist es weiterhin denkbar, dass bei Erfassung von unstetigen Verläufen des Gesamtdrucks im Drucksensor 22, die unstetigen Bereiche linearisiert werden. Damit wird verhindert, dass der Regler im Block 31 versucht Unstetigkeiten auszuregeln, was typischerweise zu einer Erhöhung seiner Stellgröße - dem ersten Ansteuersignalanteil - bis zu einer Stellgrößenbeschränkung führt.

Ferner ist denkbar, dass über den Pfeil 3 ein Gesamtsollwert an die Regeleinrichtung 4 übergeben wird. Der Gesamtsollwert enthält somit gleichzeitig den Sollwert p_{1ref} sowie die Sollamplitude. Um den Gesamtsollwert sowohl für den Druckregler 25 als auch für den Regler der Regelung 31 verwenden zu können, erfolgt zunächst eine nicht dargestellte Aufteilung des Gesamtsollwerts in den Sollwert p_{1ref} und in die Sollamplitude. Diese werden entsprechend an den Druckregler 25 und an den Regler des Blocks 31 übergeben. Eine derartige Aufteilung kann beispielsweise durch eine Filterung erreicht werden, wie sie in der Regeleinrichtung 4 mit den erfassten Werten aus dem Drucksensor 22 durchgeführt wird.

## Patentansprüche

1. Verfahren zum Betreiben eines Fluidventils (1) für ein Steuern oder Regeln eines Fluids, mit mindestens einer beweglichen Ventilkomponente, die mittels mindestens eines elektrischen Ansteuersignals verlagerbar ist, das mindestens einen ersten Ansteuersignalanteil enthält, der eine oszillierende Ventilbewegung der Ventilkomponente herbeiführt, **dadurch gekennzeichnet, dass** im Fluid durch die oszillierende Ventilbewegung erzeugte Druckschwingungen erfasst und für eine mittels des ersten Ansteuersignalanteils bewirkten Regelung (31) der oszillierenden Ventilbewegung verwendet werden.

2. Verfahren nach Anspruch 1, **dadurch gekennzeichnet, dass** der Volumenstrom und/oder der Druck des Fluids gesteuert und/oder geregelt wird.

3. Verfahren nach einem der vorhergehenden Ansprüche, **dadurch gekennzeichnet, dass** die Ventilkomponente zum Steuern oder Regeln des Fluids mittels mindestens eines zweiten Ansteuersignalanteils des Ansteuersignals eine Grundbewegung ausführt, die zu Grunddruckänderungen im Fluid führt.

4. Verfahren nach Anspruch 3, **dadurch gekennzeichnet, dass** die Grundbewegung und die oszillierende Ventilbewegung gemeinsam oder getrennt anhand mindestens eines Sollwerts geregelt wird/werden.

5. Verfahren nach Anspruch 3, **dadurch gekennzeichnet, dass** die Summe aus Grunddruckänderungen und Druckschwingungen Gesamtdruckänderungen des Fluids darstellt.

6. Verfahren nach Anspruch 5, **dadurch gekennzeichnet, dass** aus den Gesamtdruckänderungen die Druckschwingungen durch Berechnung oder Filterung ermittelt werden.

7. Verfahren nach einem der vorhergehenden Ansprüche, **dadurch gekennzeichnet, dass** die oszillierende Ventilbewegung anhand von Amplituden der Druckschwingungen geregelt wird.

8. Verfahren nach einem der vorhergehenden Ansprüche, **dadurch gekennzeichnet, dass** sprunghafte Verläufe in den Druckschwingungen und/oder im Sollwert linearisiert werden.

9. Verfahren nach einem der vorhergehenden Ansprüche, **dadurch gekennzeichnet, dass** als Fluidventil (1) ein Hydraulikventil (11) eingesetzt wird.

10. Verfahren nach einem der vorhergehenden Ansprüche, **dadurch gekennzeichnet, dass** als Fluidventil (1) ein Magnetventil (10) eingesetzt wird.

11. Verfahren nach einem der vorhergehenden Ansprüche, **dadurch gekennzeichnet, dass** als Ansteuersignal ein Pulsweitenmodulationssignal verwendet wird.

12. Verfahren nach Anspruch 10, **dadurch gekennzeichnet, dass** eine elektrische Ausgangsstufe das Ansteuersignal aufnimmt und ein Ventilstellsignal erzeugt, das eine Spule des Magnetventils bestromt.

13. Verfahren nach Anspruch 12, **dadurch gekennzeichnet, dass** das Ventilstellsignal eine Stellfrequenz aufweist und dass durch Herabsetzen der Stellfrequenz die oszillierende Ventilbewegung bewirkt wird.

14. Verfahren nach Anspruch 13, **dadurch gekennzeichnet, dass** das Ventilsignal die Spule mit der herabgesetzten Stellfrequenz zur Erzeugung der oszillierenden Ventilbewegung bestromt wird.

15. Verfahren nach einem der vorhergehenden Ansprüche, **dadurch gekennzeichnet, dass** das Fluidventil (1) in einem Automatgetriebe, insbesondere eines Fahrzeugs, verwendet wird.

16. Verfahren nach Anspruch 15, **dadurch gekennzeichnet, dass** das Fluidventil (1) in dem Automatgetriebe eine Getriebebremse und/oder eine Getriebekupplung (19) betätigt.

17. Verfahren nach Anspruch 16, **dadurch gekennzeichnet, dass** der Getriebebremse und/oder Getriebekupplung (19) mindestens eine Fluidblende zugeordnet ist und die Gesamtdruckänderungen strömungstechnisch vor und/oder hinter der Fluidblende erfasst werden.

18. Verfahren nach einem der vorhergehenden Ansprüche, **dadurch gekennzeichnet, dass** die oszillierende Ventilbewegung im Wesentlichen eine Sinusbewegung ist.

19. Steuergerät zum Betreiben eines Fluidventils (1) für ein Steuern oder Regeln eines Fluids, insbesondere nach einem der vorhergehenden Verfahren, wobei das Fluidventil mindestens eine bewegliche Ventilkomponente aufweist, die von dem Steuergerät mittels mindestens eines elektrischen Ansteuersignals verlagerbar ist, das mindestens einen ersten Ansteuersignalanteil aufweist, der eine oszillierende Ventilbewegung der Ventilkomponente herbeiführt, **dadurch gekennzeichnet, dass** das Fluid aufgrund der oszillierenden Ventilbewegung Druckschwingungen aufweist, die von dem Steuergerät erfasst werden, und das Steuergerät gemeinsam mit den Druckschwingungen und dem Ansteuersignal eine Ventilbewegungsregelung bildet, bei der die Druckschwingungen für die Regelung der oszillierenden Ventilbewegung verwendet werden..

## Claims

1. Method for operating a fluid valve (1) for performing open-loop or closed-loop control of a fluid, having at least one moveable valve component which can be displaced by means of at least one electrical actuation signal which contains at least a first actuation signal component which brings about an oscillating valve movement of the valve component, **characterized in that** pressure oscillations which are generated in the fluid by the oscillating valve movement are sensed and used for closed-loop control (31), brought about by means of the first actuation signal component, of the oscillating valve movement.

2. Method according to Claim 1, **characterized in that** the volume flow and/or the pressure of the fluid is open-loop and/or closed-loop controlled.

3. Method according to one of the preceding claims, **characterized in that** the valve component for performing open-loop or closed-loop control of the fluid executes a basic movement, bringing about changes in the basic pressure in the fluid, by means of at least a second actuation signal component of the actuation signal.

4. Method according to Claim 3, **characterized in that** the basic movement and the oscillating valve movement are closed-loop controlled together or separately on the basis of at least one setpoint value.

5. Method according to Claim 3, **characterized in that** the sum of the changes in the basic pressure and the pressure oscillations constitute changes in the overall pressure of the fluid.

6. Method according to Claim 5, **characterized in that** the pressure oscillations are determined from the changes in the overall pressure by calculation or filtering.

7. Method according to one of the preceding claims, **characterized in that** the oscillating valve movement is closed-loop controlled on the basis of amplitudes of the pressure oscillations.

8. Method according to one of the preceding claims, **characterized in that** discontinuous profiles in the pressure oscillations and/or in the setpoint value are linearized.

9. Method according to one of the preceding claims, **characterized in that** a hydraulic valve (11) is used as the fluid valve (1).

10. Method according to one of the preceding claims, **characterized in that** a solenoid valve (10) is used as the fluid valve (1).

11. Method according to one of the preceding claims, **characterized in that** a pulse-width modulation signal is used as the actuation signal.

12. Method according to Claim 10, **characterized in that** an electric output stage picks up the actuation signal and generates a valve actuation signal which energizes a coil of the solenoid valve.

13. Method according to Claim 12, **characterized in that** the valve actuation signal has an actuation frequency, and **in that** the oscillating valve movement is brought about by reducing the actuation frequency.

14. Method according to Claim 13, **characterized in that** the valve signal is energized the coil with the reduced actuation frequency in order to generate the oscillating valve movement.

15. Method according to one of the preceding claims, **characterized in that** the fluid valve (1) is used in an automatic transmission, in particular of a vehicle.

16. Method according to Claim 15, **characterized in that** the fluid valve (1) activates a transmission brake and/or a transmission clutch (19) in the automatic transmission.

17. Method according to Claim 16, **characterized in that** at least one fluid orifice is assigned to the transmission brake and/or transmission clutch (19), and the changes in overall pressure are sensed fluidically upstream and/or downstream of the fluid orifice.

18. Method according to one of the preceding claims, **characterized in that** the oscillating valve movement is essentially a sinusoidal movement.

19. Control unit for operating a fluid valve (1) or performing open-loop or closed-loop control of a fluid, in particular according to one of the preceding claims, wherein the fluid valve has at least one moveable valve component which can be displaced by the control unit by means of at least one electrical actuation signal which has at least a first actuation signal component which brings about an oscillating valve movement of the valve component, **characterized in that** the fluid has, owing to the oscillating valve movement, pressure oscillations which are sensed by the control unit, and the control unit forms, together with the pressure oscillations and the actuation signal, a valve movement closed-loop control means in which the pressure oscillations are used for the closed-loop control of the oscillating valve movement.

## Revendications

1. Procédé pour actionner une soupape de fluide (1) destinée à commander ou à réguler un fluide, comportant au moins un composant de soupape mobile qui peut être déplacé au moyen d'au moins un signal de commande électrique contenant au moins une première partie de signal de commande qui provoque un mouvement de soupape oscillant du composant de soupape, **caractérisé en ce que** des oscillations de pression générées dans le fluide par le mouvement de soupape oscillant sont détectées et sont utilisées pour une régulation (31), induite au moyen de la première partie de signal de commande, du mouvement de soupape oscillant.

2. Procédé selon la revendication 1, **caractérisé en ce que** le débit volumique et/ou la pression du fluide est/sont commandé(s) et/ou régulé(s).

3. Procédé selon l'une quelconque des revendications précédentes, **caractérisé en ce que** le composant de soupape produit un mouvement de base au moyen d'au moins une deuxième partie de signal de commande du signal de commande afin de commander ou de réguler le fluide, lequel mouvement de base conduit à des variations de pression de base dans le fluide.

4. Procédé selon la revendication 3, **caractérisé en ce que** le mouvement de base et le mouvement de soupape oscillant est/sont régulé(s) en commun ou de manière séparée sur la base d'au moins une valeur théorique.

5. Procédé selon la revendication 3, **caractérisé en ce que** la somme des variations de pression de base et des oscillations de pression représente des variations totales de pression du fluide.

6. Procédé selon la revendication 5, **caractérisé en ce que** les oscillations de pression sont déterminées par calcul ou filtrage à partir des variations totales de pression.

7. Procédé selon l'une quelconque des revendications précédentes, **caractérisé en ce que** le mouvement de soupape oscillant est régulé sur la base d'amplitudes des oscillations de pression.

8. Procédé selon l'une quelconque des revendications précédentes, **caractérisé en ce que** des sauts apparaissant dans les oscillations de pression et/ou dans la valeur théorique sont linéarisés.

9. Procédé selon l'une quelconque des revendications précédentes, **caractérisé en ce qu'**une vanne hydraulique (11) est utilisée en tant que soupape de fluide (1).

10. Procédé selon l'une quelconque des revendications précédentes, **caractérisé en ce qu'**une électrovanne (10) est utilisée en tant que soupape de fluide (1).

11. Procédé selon l'une quelconque des revendications précédentes, **caractérisé en ce qu'**un signal de modulation d'impulsion en largeur est utilisé en tant que signal de commande.

12. Procédé selon la revendication 10, **caractérisé en ce qu'**un étage de sortie électrique reçoit le signal de commande et génère un signal de réglage de soupape qui alimente en courant une bobine de l'électrovanne.

13. Procédé selon la revendication 12, **caractérisé en ce que** le signal de soupape présente une fréquence de réglage et **en ce que** le mouvement de soupape oscillant est provoqué par abaissement de la fréquence de réglage.

14. Procédé selon la revendication 13, **caractérisé en ce que** le signal de soupape est alimenté en courant la bobine avec la fréquence de réglage abaissée pour générer le mouvement de soupape oscillant.

15. Procédé selon l'une quelconque des revendications précédentes, **caractérisé en ce que** la soupape de fluide (1) est utilisée dans une boîte de vitesse automatique, notamment d'un véhicule.

16. Procédé selon la revendication 15, **caractérisé en ce que** la soupape de fluide (1) utilisée dans la boîte de vitesses automatique actionne un frein de boîte et/ou un embrayage de boîte (19).

17. Procédé selon la revendication 16, **caractérisé en ce qu'**au moins un obturateur de fluide est associé au frein de boîte et/ou à l'embrayage de boîte (19) et **en ce que** les variations totales de pression sont détectées par une technique d'écoulement de fluide avant et/ou après l'obturateur de fluide.

18. Procédé selon l'une quelconque des revendications précédentes, **caractérisé en ce que** le mouvement de soupape oscillant est essentiellement un mouvement sinusoïdal.

19. Appareil de commande pour faire fonctionner une soupape de fluide (1) destinée à commander ou à réguler un fluide, notamment conformément à l'un des procédés précédents, dans lequel la soupape de fluide comporte au moins un composant de soupape mobile qui peut être décalé par l'appareil de commande au moyen d'au moins un signal de commande électrique comportant au moins une première partie de signal de commande qui provoque un mouvement de soupape oscillant du composant de soupape, **caractérisé en ce que** le fluide présente des oscillations de pression du fait du mouvement de soupape oscillant, lesquelles oscillations de pression sont détectées par l'appareil de commande, et l'appareil de commande constitue un système de régulation du mouvement de soupape en association avec les oscillations de pression et le signal de commande, dans lequel les oscillations de pression sont utilisées pour la régulation du mouvement de soupape oscillant.
